# EUROPEAN PATENT APPLICATION

(11) **EP 4 177 527 A1**
(43) Date of publication of application: **10.05.2023**
(21) Application number: 21206330.9
(22) Date of filing: 03.11.2021
(51) Int. Cl.: F24D 3/14, E04C 1/00, E04C 2/52

(54) **HEATING OR COOLING ELEMENT**

(71) Applicant: Vidar Last Holding BV, 8294 PE Mastenbroek (NL)
(72) Inventor: LAST, VIDAR JOHAN, 8294 PE MASTENBROEK (NL)
(74) Representative: Van den Berg, Frans Richard

(57) **Abstract**

The invention pertains to a heating or cooling element comprising a carrier mat, a first tube which is attached in meander or spiral form to the carrier mat, wherein the heating or cooling element can be rolled up; and wherein the carrier mat is made of polymer material, and the carrier mat is cut and bent around the first tube to connect the first tube to the carrier mat.

## Description

The present invention relates to a heating or cooling element.

Heating or cooling elements are known in the art, in particular for underfloor heating. EP 3 205 945 and WO 2019/031962 disclose floor elements comprising tubes or conduits and a carrier mat, the carrier mat being rollable. The said carrier mat is generally a metal grid, which requires cutting to create the right shape. The production is limited to single meander or double meander patterns when automatically produced. Moreover, conventional prefabricated floor elements require additional tubes to be connected to the outer ends of the floor element, which also requires additional mechanical attachment to the floor to keep the tubes in place. The positioning of the fixtures requires additional time and is therefore less convenient.

The objective of the present invention is to provide novel heating or cooling element.

The present invention pertains to a heating or cooling element comprising a carrier mat, a first tube which is attached in meander or spiral form to the carrier mat, wherein the heating or cooling element can be rolled up; and wherein the carrier mat is made of polymer material, and the carrier mat is cut and bent around the first tube to connect the first tube to the carrier mat. With the carrier mat being of a polymer material, the carrier mat can be cut on two sides of the tube and the cut parts can be bent over the tube, which obviates the need of separate attachment means to bind the tube to the mat. The cut and bent parts can be connected using a glue or connection means. Preferably, the polymer material is a thermoplastic polymer. A thermoplastic polymer can be bent upon heating and when cooled down the bent polymer maintains its form. In this way, no additional measures need to be taken such as glue or connection means to fasten the tube to the mat. A further advantage of the heating or cooling element of the invention is that it can be rolled up for easy transport and storage, and it can be unrolled, e.g. on a building floor easily so that laying the inventive element becomes easy and less time consuming. The carrier mat being of polymer material enables the inventive element to be laid out in a flat manner without parts sticking upward (out of plane). When the element is applied on the floor this has the additional benefit that the element does not have to be attached to the floor surface or that considerably less attachments to the floor surface need to be applied, which in turn leads to a shorter installation time and effort. The polymeric carrier mat and consequently the inventive element is generally lighter than a metal carrier mat as is currently commercially used.

The heating or cooling element can be used for any suitable use to heat or cool its surroundings as known in the art. The inventive element can be applied in a floor, a wall or a ceiling, or a combination thereof. In one embodiment, the heating or cooling element of the invention is a floor element.

The element of the invention comprises a carrier mat, which is made of a polymeric material. The polymeric material is preferably a thermoplastic polymer. Examples of thermoplastic polymers include polyethylene (PE), polypropylene (PP) and polyvinyl chloride (PVC). The carrier mat is preferably embodied as a mesh with a wire thickness of the polymeric material of 1 to 20 mm, preferably of 1 to 10 mm and most preferably from 1 to 5 mm. Because of the small wire thickness the carrier mat can be cut with a hand tool. At such a small wire thickness the weight of the carrier mat moreover remains limited. A relatively large floor part can hereby be manufactured and rolled up without the tube being damaged by the weight of the rolled-up package.

The mesh can be in the shape of a square or a hexagonal (like a honeycomb), preferably the mesh is square-shaped. In one embodiment, the mesh width of the carrier mat is between 5 and 20 cm, preferably 15 cm. With such a mesh width the weight of the carrier mat is further limited so that the tube is not damaged by the weight of the rolled-up package.

The carrier mat can preferably be cut with a hand tool. In this way, the carrier mat can be shaped to the room it will be rolled out, so that an optimal heating or cooling pattern can be provided. The carrier mat preferably has a thickness such that the force which has to be exerted on the carrier mat in order to cut it is less than 500 N, preferably less than 300 N and more preferably less than 100 N. Use is for instance made for cutting purposes of side cutting pliers or centre cutting pliers. The carrier mat can preferably be cut using a non-electrical hand tool.

The first tube in the element of the invention can be any conventional tube used for cooling or heating. The first tube may be made from polymer material or polymer laminate. The polymer material and/or polymer laminate can be any polymer material and/or polymer laminate known in the art which can be suitably used in heating or cooling elements of the invention. The polymer can be polyethylene in particular crosslinked polyethylene such as PEX-A, PEX-B, PEX-C or PE-RT. The polymer laminate can comprise a polymer like polyethylene (PE) or polypropylene (PP) and an oxygen barrier which can be a second polymer such as ethylene vinyl alcohol (EVOH) or a metal such as copper or aluminum. In a preferred embodiment the oxygen barrier is a second polymer, in particular ethylene vinyl alcohol (EVOH). The polymer laminate can be polyethylene with an oxygen barrier coating, or a multilayer comprises layers of the polymer and the second polymer and/or metal. In one embodiment, the polymer laminate may comprise three or more layers of the polymer and the oxygen barrier. Preferably, the polymer laminate comprises three or five layers. More preferably, the polymer laminate comprises three layers. Examples of such a polymer laminates include PE-EVOH-PE, PP-EVOH-PP, PEX-EVOH-PEX. Preferably, the polymer laminate is selected from PE-EVOH-PE and PEX-EVOH-PEX. Most preferably, the polymer laminate is PEX-EVOH-PEX.

The first tube has an oxygen permeability below 0.32 mg/m³ at 40°C. The oxygen permeability is determined according to DIN 4726. Alternatively or additionally, the first tube has an oxygen permeability below 3.60 mg/m³ at 80°C. The low oxygen permeability of the first tube enables prevention of oxidation of metal parts, in particular iron containing parts, surrounding the inventive element.

The first tube is connected to the carrier mat by cutting the mat on both sides of the tube, and bending the cut pieces over the tube. The cut pieces can be connected by a glue or by connecting means. In a preferred embodiment, the polymer material of the carrier mat is a thermoplastic polymer, which can be bent by heating the cut pieces. Once the cut pieces are bent to secure the first tube, the pieces are cooled down or left to cool to room temperature to render the bent cut pieces rigid, thereby securing the first tube. The creation and bending of cut pieces is repeated as many times as desired in order to secure that the entire first tube is connected to the carrier mat in the desired pattern.

The first tube generally forms a pattern known in the art. Examples of such patterns are a spiral, a meander or a double meander. In one embodiment, the first tube forms a pattern selected from a meander or a double meander. Preferably, the first tube forms a double meander. It is contemplated that two or more of such patterns are present in the inventive element.

In one embodiment, the center-to-center distance between the first tube positioned parallel on the carrier mat is generally between 10 and 20 cm. The desired center-to-center distance will depend on the required heating or cooling output of the inventive element, which can easily be determined by the skilled person. When the inventive element is applied as a general floor element, the inventive element generally has a center-to-center distance of 15 cm. When the inventive element is applied as a floor element which is positioned close to a window or an exit, the inventive element generally has a center-to-center distance of 10 cm.

In one embodiment, the diameter of the first tube in the element of the invention is between 10 and 32 mm. Preferably, the diameter of the first tube is at least 12 mm, more preferably at least 14 mm and most preferably at least 15 mm, and preferably at most 30 mm, more preferably at most 25 mm and most preferably at most 20 mm. Most preferably, the diameter of the first tube is 16 mm. The wall thickness of the first tube is generally at most 3 mm. Preferably, the wall thickness of the first tube is at least 1 mm, more preferably at least 1.5 mm, and preferably at most 2.5 mm.

The cooling and heating element can be rolled up to form a roll. The inventive element with the polymeric mat and first tube generally has a flexibility to allow rolling up of the element. The rolled-up element according to the invention can be more easily stored and/or transported. Moreover, the rolled-up element further allows easier application which requires simply unrolling of the element. The invention therefore also pertains to a rolled-up heating or cooling element comprising a carrier mat, a first tube which is attached in meander or spiral form to the carrier mat, wherein the heating or cooling element can be rolled up; and wherein the carrier mat is made of polymer material, and the carrier mat is cut and bent around the first tube to connect the first tube to the carrier mat.

The element of the invention, in particular the first tube may have an even number of outer ends. Generally, a first outer end, the input, allows for introducing fluid into the inventive element, and a second outer end, the output, allows the fluid to exit the inventive element. In operation, the fluid, preferably water, enters the element through the input or the first outer end, flows through the channels according to the desired pattern to enable heat exchange with its surroundings, and exits the element through the output or the second outer end. The element may alternatively comprise four or more outer ends (always even number) when multiple patterns are present with a separate input and output (and separate tubes). When four or more outer ends are present a corresponding multitude of (first) tubes is present in the element. The outer ends are generally connected through a manifold with the heater or cooler unit, which enables the fluid to flow through the tubes of the inventive element.

In one embodiment, the inventive element is pressurized, preferably with air. Preferably, the outer ends are closed in order to maintain the pressure within the inventive element. In one embodiment, the inventive element is pressurized prior to rolling up the element.

The invention further pertains to a process for preparing an in-plane heating or cooling element comprising a carrier mat, a first tube which is attached in meander or spiral form to the carrier mat, wherein the heating or cooling element can be rolled up; and wherein the carrier mat is made of polymer material, and the carrier mat is cut and bent around the first tube to connect the first tube to the carrier mat, comprising the steps of:
(a) contacting the heating or cooling element to a bath having a temperature of at least 50°C;
(b) pressing the heating or cooling element to obtain an in-plane element; and
(c) contacting the heating or cooling element to a bath having a temperature of at most 30°C.

The process of the invention enables the production of an in-plane heating or cooling element, in particular of prefabricated elements containing a polymeric carrier mat and first tube such as the element according to the invention. With the wording "in-plane" is meant that the heating or cooling element is in a single plane without any parts curling up and away from the surface. This allows for a more time-efficient laying of the heating or cooling element. This process also allows the prefabricated element to be rolled up, optionally stored and transported, and unrolled while maintaining the in-plane shape.

In step (a) of the process of the invention, the heating or cooling element is contacted to a bath having a temperature of at least 50°C. The bath temperature is chosen such that the temperature of the polymer in the carrier mat and first tube is softened so that it can be pressed and set to an in-plane surface. The bath temperature is not chosen so high, i.e. close to or above the glass transition temperature of the polymer or polymers in the carrier mat and first tube, that the diameter of the channels in the first tube reduce considerably or even get blocked. Therefore, the bath temperature is generally at least 10°C below the glass transition temperature of the polymer, in particular of the polymer with the lowest glass transition temperature when more polymers are present. The bath temperature is preferably at least 55°C, and most preferably at least 60°C, and preferably at most 110°C, more preferably at most 100°C, even more preferably at most 90°C, and most preferably at most 80°C. The fluid making up the bath can be any suitable fluid. Preferably, the fluid is water.

In step (b) of the inventive process, the heating or cooling element is pressed into a single surface to obtain an in-plane element. Step (b) can be performed using a press with rolls or a surface and a roll in between which the element can be placed. The press includes a unit to apply the desired pressure onto the roll(s). Step (b) can be performed following step (a) and/or simultaneous with step (a).

The heated element is subsequently cooled in step (c) in a bath with a temperature of at most 30°C. In step (c) the temperature of the heating or cooling element is chosen such that the polymer in the carrier mat and the first tube is hard and not pliable anymore. The bath temperature is preferably at most 25°C, and most preferably at most 20°C, and preferably at least 0°C, more preferably at least 5°C, even more preferably at least 10°C, and most preferably at least 15°C. The fluid making up the bath can be any suitable fluid. Preferably, the fluid is water.

The invention further pertains to the use of the heating or cooling element according to the invention in buildings. The invention further pertains to the use of the heating or cooling element according to the invention in floors, walls or ceilings, preferably in floors. The invention further pertains to the use of the heating or cooling element according to the invention in outside roads or in driveways. The invention further pertains to the use of the heating or cooling element according to the invention in agriculture. The element of the invention can be used to apply to soil to heat the soil and its surrounding, e.g. when crop or fruit may be lost due to frost. The invention further pertains to the use of the heating or cooling element according to the invention in a sports field, such as a football field or hockey field.

The invention further pertains to a machine for producing a pre-fabricated heating or cooling element comprising a carrier mat and a tube provided in a pattern on the carrier mat, comprising:
- a supply line for supplying the carrier mat, wherein the supply line is configured to transport the carrier mat in its longitudinal direction;
- a first supply line for supplying a tube;
- at least four first guides for positioning the first tube in meandering or spiral form relative to the carrier mat; and
- a binding apparatus for mechanically binding the first tube to the carrier mat in a meander-shaped or spiral-shaped pattern with binding means,
wherein the first guides form pairs which are separately moveable along the same line arranged perpendicular to the longitudinal direction, and the pairs are positioned along the longitudinal direction. With the machine of the invention, the heating or cooling element can be produced. The advantage of the inventive machine is that the width of the element can be large, for example at least 2 meters, or even 4 meters.

In one embodiment, the number of first guides is even and at least 6, preferably at least 8 and most preferably at least 10, and preferably at most 50, and more preferably at most 40, and most preferably at most 30. The number of first guides depends on the pattern and the pattern size that is to be created.

Further advantages, features and details of the invention are elucidated on the basis of exemplary embodiments thereof, wherein reference is made to the accompanying figures:
Figure 1 shows a schematic overview of a device for manufacturing the heating or cooling element according to the invention;
Figures 2A-B show guide arrangements before and after single meander pattern formation in the heating of cooling element according to the invention;
Figures 3A-B show guide arrangements before and after double meander pattern formation in the heating of cooling element according to the invention; and
Figures 4A-B show guide arrangements before and after spiral pattern formation in the heating of cooling element according to the invention.

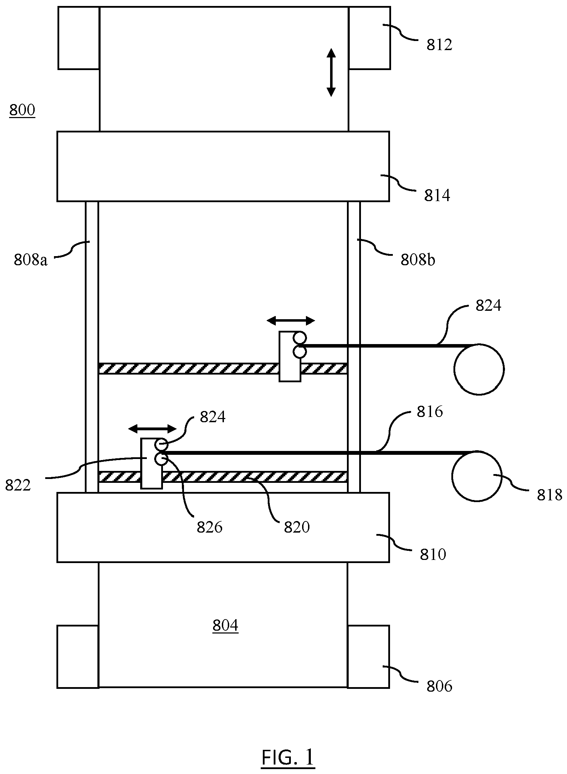

Cooling and heating element of the invention comprises a carrier mat 804 as mesh material to which first conduit or first tube 816 and second conduit or second tube 824 are secured using ties (not shown), which are created by cutting the polymer carrier mat 804 around the tubes 816 or 824 at the tie location, and subsequently heating, bending and cooling the two cut ends so as to form a tie fixing the conduits 816, 824 to the polymer carrier mat 804. In the longitudinal direction (along the double arrow at the top right of Figure 1) of carrier mat 804 conduits 816, 824 are arranged at a chosen distance and in transverse direction of mat 804 at a chosen distance in bends.

Free strip B is optionally provided at the side edges of carrier mat 4. Insulating mat 821 (not shown) is optionally arranged on the underside of carrier mat 804.

Machine 800 (Figure 1) comprises a roll 802 for the feed of a mesh-like carrier mat 804. For the sake of clarity in Figure 1 the lattice of carrier mat 804 is not shown, although carrier mat 804 has in reality a mesh form.

Carrier mat 804 is guided from supply roll 806 to two conveyor belts 808a, 808b. A guide roller 810 is optionally provided to guide the carrier mat in the direction of conveyor belts 808a, 808b. Conveyor belts 808a, 808b are provided with studs so that the studs can hook into the meshes of the mesh-like carrier mat 804 in order to thus transport the mesh-like carrier mat 804. Carrier mat 804 is transported by conveyor belts 808a, 808b in the direction of the arrow P, after which carrier mat 804 is rolled up onto a roll 812. A guide roller 814 is optionally provided on this output side. Guide rollers 810, 814 contribute toward holding carrier mat 804 on the conveyor belt.

First conduit 816 is supplied from a roll 818. Arranged above the carrier mat is a rail 820 along which a carriage 822 can move reciprocally. The carriage is provided with one or more guide rollers 824, 826 which position conduit 816 on carrier mat 804.

Machine 800 moreover comprises a bending and cutting unit 823 (not shown), wherein conduits 816, 824 are attached to the mesh-like carrier mat 804. The bending and cutting unit may be a unit capable of cutting the wires of the carrier mat 804, heating the cut ends of the carrier mat to a temperature at which the polymer becomes flexible and bendable, bend the cut ends and cool the cut ends to fasten them around the conduit 816 to the carrier mat 804. The bending and cutting unit can additionally or alternatively comprise means to glue or a connecting means to connect the two cut ends of the carrier mat with ties or glue. The bending and cutting unit is for instance likewise provided on carriage 822. The bending and cutting unit can alternatively also be located on the other side of carrier mat 804 relative to the carriage for the purpose of attaching conduit 816 to mesh-like carrier mat 804 from this side.

Carriage 822 then moves in the opposite direction in order to place a new part of conduit 816 over the desired width on carrier mat 804, wherein the attaching means of the apparatus also attach this part of conduit 816 to carrier mat 804.

The optional second conduit 824 for the floor part/mat is arranged in similar manner on carrier mat 804. This second conduit 824 is particularly advantageous when a double meander pattern of the conduits 816 and 824 is to be created on the carrier mat 804. In machine 800 carrier mat 804 is transported horizontally along the attaching means. The attaching means, such as a bending and cutting unit, are in that case preferably provided on carriages 822 so that conduits 816, 824 can be attached immediately to carrier mat 804 while carriages 822 position conduits 816, 824 on carrier mat 804. It will be apparent that in machine 800 further process steps can also be included and/or be provided in other alternative manner.

Separate rails 821 (not shown) each with two guides 830 are positioned parallel to rail 820. The guides 830 may each be provided with peripheral guides 831 (not shown) which serve to keep the conduits 816, 824 in place around the corresponding guide 830. The peripheral guide 831 may have a circular shape. The peripheral guide may be positioned towards the corresponding guide 830 to allow the conduit 816, 824 to move with the guide or to fasten the conduit 816, 824 between the peripheral guide 831 and guide 830, for example to tighten the pattern just before applying the cut end ties to connect the conduit 816, 824 to the carrier mat 804. These separate rails 821 with guide pairs 830 can be moved separately from the rail 820. In one embodiment the rails 821 can move vertically or be tilted. The number of rails will depend on the pattern that is to be formed. The guides 830 may be circular-shaped or have the shape of part of a circle, such as half of a circle. The guides are positioned parallel to the carrier mat 804 and capable of connecting with and shaping the tube 816 (or optional conduit 824), in particular providing the curve-like shape. The guides 830 may have indents in which the conduit 816 can be carried, and which maintains the conduits 816 (or optional conduit 824), in the same plane. The size of the guide 830 may be the same as the curve of the conduits 816, 824 require to produce the pattern. Alternatively, the size of guides 830 may be smaller than the curve of the conduits 816, 824. As a further alternative, the size of guides 830 may be larger than the curve of the conduits 816, 824, in particular when the distance between conduits 816, 824 is small, e.g. guides 830 with a diameter of 15 cm can be chosen when the heart-to-heart distance is 10 cm. Typically, the diameter of the guides 830 is between 5 and 15 cm.

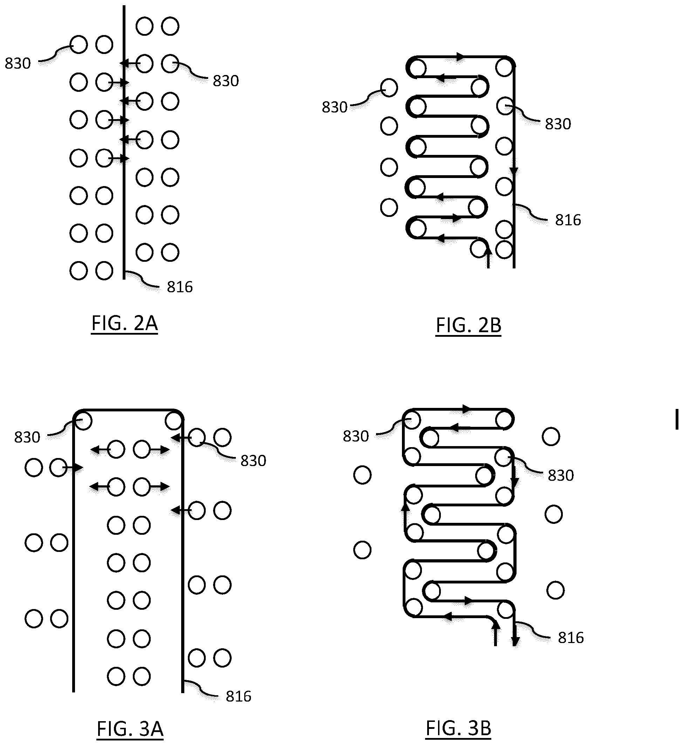

To create a single meander shape, the arrangements shown in Figures 2A and 2B can be used. A plurality of guide pairs 830 are arranged as depicted in Figure 2A. The conduit 816 is led through the guide pairs 830 as shown in Figure 2A. Every guide 830 is moveable over a line perpendicular to the direction of the conduit 816 (as indicated by the arrows). The guides 830 can be moved in a direction as indicated in Figure 2B creating a single meander pattern from the conduit 816. In the configuration in Figure 2B the conduit 816 is led back and positioned next to the inlet of the conduit 816 (the flow direction is indicated by the arrows). In this way no additional effort is required to lead the outlet of the conduit 816 to a manifold.

To create a double meander shape, the arrangements shown in Figures 3A and 3B can be used. A plurality of guide pairs 830 are arranged as depicted in Figure 3A. The conduit 816 is led through the guide pairs 830 as shown in Figure 3A. Every guide 830 is moveable over a line perpendicular to the direction of the conduit 816 (as indicated by the arrows). The guides 830 can be moved in a direction as indicated in Figure 3B creating a double meander pattern from the conduit 816. In the configuration in Figure 3B the conduit 816 is led back and positioned next to the inlet of the conduit 816 (the flow direction is indicated by the arrows). In this way no additional effort is required to lead the outlet of the conduit 816 to a manifold. It is also envisaged to create the double meander pattern with two conduits 816, 824 (not shown), and create a double meander pattern with two inlets and two outlets, which can be positioned next to each other or can be positioned on opposite sides of the carrier mat 804.

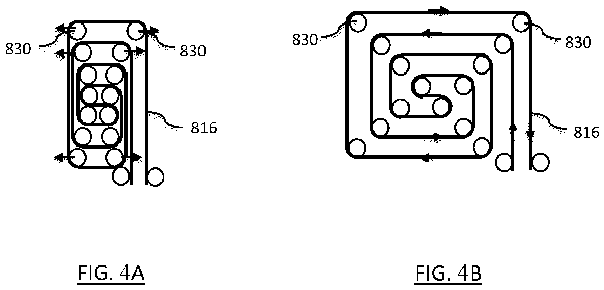

To create a spiral shape, the arrangements shown in Figures 4A and 4B can be used. A plurality of guide pairs 830 are arranged as depicted in Figure 4A. The conduit 816 is led through the guide pairs 830 as shown in Figure 4A. Every guide 830 is moveable over a line perpendicular to the direction of the conduit 816 (as indicated by the arrows). The guides 830 can be moved in a direction as indicated in Figure 4B creating a spiral pattern from the conduit 816. In the configuration in Figure 4B the conduit 816 is led back and positioned next to the inlet of the conduit 816 (the flow direction is indicated by the arrows). In this way no additional effort is required to lead the outlet of the conduit 816 to a manifold.

In a preferred embodiment, the heating or cooling element, after the conduit pattern is applied and the conduit 816 is connected to the carrier mat 804, is led through a water bath at a temperature of at least 50°C, pressed and cooled to room temperature to ensure that the inventive element is in plane and can be rolled up.

The present invention is by no means limited to the above-described embodiments thereof. The rights sought are defined by the following claims, within the scope of which many modifications can be envisaged.

## Claims

1. A heating or cooling element comprising a carrier mat, a first tube which is attached in meander or spiral form to the carrier mat, wherein the heating or cooling element can be rolled up; and wherein the carrier mat is made of polymer material, and the carrier mat is cut and bent around the first tube to connect the first tube to the carrier mat.

2. Heating or cooling element according to claim 1, wherein the polymer material is a thermoplastic polymer.

3. Heating or cooling element according to claims 1 or 2, wherein the polymer material is polyethylene, polypropylene and polyvinyl chloride.

4. Heating or cooling element according to any one of the preceding claims wherein the carrier mat has a wired mesh shape.

5. Heating or cooling element according to any one of the preceding claims wherein the carrier mat comprises wires of polymer material with a thickness between 1 and 20 mm, preferably 1 to 5 mm.

6. Heating or cooling element according to any one of the preceding claims wherein the cut polymer material is heated to soften the polymer material, bent to include and fasten the first tube to the carrier mat, and cooled to harden the polymer material.

7. A machine for producing a pre-fabricated heating or cooling element comprising a carrier mat and a tube provided in a pattern on the carrier mat, comprising:
- a supply line for supplying the carrier mat, wherein the supply line is configured to transport the carrier mat in its longitudinal direction;
- a first supply line for supplying a tube;
- at least four first guides for positioning the first tube in meandering or spiral form relative to the carrier mat; and
- a binding apparatus for mechanically binding the first tube to the carrier mat in a meander-shaped or spiral-shaped pattern with binding means,
wherein the first guides form pairs which are separately moveable along the same line arranged perpendicular to the longitudinal direction, and the pairs are positioned along the longitudinal direction.

8. Machine according to claim 7 wherein the number of first guides is even and at least 6 and at most 50.
